# EUROPÄISCHE PATENTSCHRIFT

(11) **EP 2 669 100 B1**
(45) Veröffentlichungstag und Bekanntmachung des Hinweises auf die Patenterteilung: **24.10.2018**
(21) Anmeldenummer: 13002739.4
(22) Anmeldetag: 27.05.2013
(51) Int. Cl.: B60D 1/48

(54) **Trägeranordnung für eine Anhängekupplung mit einem pressgehärteten Tragbauteil**
Carrier assembly for a trailer coupling with a pressure-hardened support component
Agencement de support pour un attelage avec un élément de support durci par presse

(30) Priorität: 01.06.2012 DE 102012010781; 01.08.2012 DE 102012015246
(43) Veröffentlichungstag der Anmeldung: 04.12.2013
(60) Teilanmeldung: 18194764.9
(73) Patentinhaber: WESTFALIA - Automotive GmbH, 33378 Rheda-Wiedenbrück (DE)
(72) Erfinder: Angermann, Dr. Kay, 04720 Döbeln (DE)
(74) Vertreter: Patentanwälte Bregenzer und Reule Partnerschaftsgesellschaft mbB

(56) Entgegenhaltungen:
- DE-A- 10 320 014
- DE-A1-102004 008 740
- DE-A1-102010 012 825
- DE-U1-202009 006 345

## Beschreibung

Die Erfindung betrifft eine Trägeranordnung für eine Anhängekupplung oder einen Lastenträger, gemäß dem Oberbegriff des Anspruchs 1.

Eine derartige Trägeranordnung geht aus DE 10 2010 012 825 A1 hervor.

Trägeranordnungen werden in der Regel verborgen unter einem Heck-Stoßfänger des Fahrzeugs, beispielsweise eines Personenkraftwagens, insbesondere mit einem Verbrennungsmotor, angebracht und tragen die Anhängekupplung oder eine Halterung dafür und/oder gegebenenfalls auch Halterungen für einen Lastenträger, die an der Trägeranordnung angeordnet werden können.

Beispielsweise ist in EP 1 380 444 A1 eine derartige Trägeranordnung dargestellt, an der eine Anhängekupplung fest angeordnet ist, beispielsweise mit dem Querträger verschraubt ist. Die grundsätzliche Problematik bei einer Trägeranordnung ist es, dass sie zum einen eine relativ hohe Steifigkeit zum Tragen der Anhängekupplung oder des Lastenträgers aufweisen soll, zum anderen aber auch insbesondere im Falle eines Heckaufpralls auf das Fahrzeug eine gewisse Nachgiebigkeit haben soll, um die Folgen des Aufpralls zu mildern.

Es ist daher die Aufgabe der vorliegenden Erfindung, eine verbesserte Trägeranordnung bereitzustellen.

Zur Lösung der Aufgabe ist bei einer Trägeranordnung der eingangs genannten Art vorgesehen, dass die Trägeranordnung mindestens ein Tragbauteil aufweist, das einen insgesamt oder zumindest abschnittsweise durch Presshärten hergestellten Grundkörper aufweist.

Der Grundkörper wird bei dem Presshärten warm umgeformt und dann abgekühlt, insbesondere abgeschreckt. Der Grundkörper wird z.B. vor dem Umformen erwärmt und/oder in einem erwärmten Presswerkzeug bearbeitet. Zweckmäßigerweise findet auch die Abkühlung des Grundkörpers im Presswerkzeug statt.

Der insgesamt oder abschnittsweise pressgehärtete Grundkörper kann somit eine Steifigkeit aufweisen, die an den jeweiligen Bedarf am besten angepasst ist. Somit ist es beispielsweise möglich, den Grundkörper abschnittsweise warm umzuformen und dabei zugleich zu härten, während andere Abschnitte unbehandelt bleiben. Lokale Härteunterschiede im Bauteil können für einen homogenen Kraft- und Spannungsverlauf im Tragbauteil, insbesondere dem Querträger, sorgen.

Lokale Ausnehmungen am Grundkörper dienen vorteilhaft einer Massereduzierung. Lokale Ausformungen können zweckmäßigerweise die Steifigkeit verbessern.

Die mehreren Grundkörper, z.B. Schalen oder Schalenelemente, können miteinander verbunden, z.B. gefügt, werden. Es kann eine biegesteife Schalenkontur erzeugt werden. Es ist auch möglich, dass eine vordere und eine hintere Schale bzw. ein Schalenelement und/oder eine obere und eine untere Schale bzw. Schalenelement zusammengesetzt werden. An sich können beliebige Schalenelemente vorgesehen sein, die dann miteinander verbunden werden. Die Schalenelemente können in unterschiedlichster Konfiguration ausgestaltet und dann miteinander verbunden werden. So kann beispielsweise an ein oberes und ein unteres Schaltelement ein hinteres und/oder ein vorderes Schaltelement angefügt werden. Auch diagonale Fugenverläufe zwischen Schalen oder Schalenelementen sind ohne weiteres möglich.

Somit ist eine an den Kraft- und Spannungsverlauf angepasste Trägerstruktur möglich. Es wird weniger Material benötigt, so dass die Trägeranordnung leicht und kostengünstig ist, was z.B. auch Kraftstoff spart. Der Grundkörper ist hochfest, dünnwandig und leicht.

Die Erfindung ermöglich eine gezielt homogene Einleitung der Kräfte und Momente in die Karosserie.

Ein Querträger ist zweckmäßigerweise mittig höherfest gehärtet und hat nach außen hin einen Verlauf mit geringeren Härten, vorteilhaft analog dem Kraft- und Spannungsverlauf bei Nutzung oder Belastung des Querträgers. Dies ist z.B. durch partielle Kühlung im Werkzeug einstellbar.

Beispielsweise wird der Grundkörper durch ein direktes Presshärten und/oder indirektes Presshärten und/oder partielles Presshärten hergestellt.

Der Grundkörper kann beispielsweise zunächst kalt umgeformt und anschließend durch Presshärten nachbearbeitet sein. Somit können also beispielsweise manche Bereiche des Grundkörpers ohne Weiterbehandlung bleiben, während andere Bereiche durch Presshärten nachbehandelt werden und dadurch eine höhere Festigkeit und damit eine höhere Steifigkeit und Belastbarkeit aufweisen.

Z.B. wird die hohe Festigkeit des Tragbauteils dadurch erreicht, dass Borstahl auf 880-950°C erhitzt wird, dann warm umgeformt und im Gesenk abkühlt, so dass er gehärtet ist.

Während ungehärteter Borstahl etwa 600 N/mm² Rm und 20% A aufweist, hat gehärteter Borstahl, z.B. 22MnB5, BTR 1650, Usibor 1500, etwa 1650 N/mm² Rm und 8% A, so dass das Tragbauteil effizient dort gehärtet ist oder wird, wo es Vorteile bringt.

Das Härten direkt im Werkzeug minimiert oder verhindert einen Verzug des Grundkörpers bzw. des Tragbauteils.

Der Grundkörper umfasst beispielsweise einen Mangan-Stahl, einen Mangan-Bor-Stahl oder dergleichen. Bevorzugt ist 22MnB5-Stahl.

Der Grundkörper ist beispielsweise aus einer Blechplatine vorgeformt, zum Beispiel umgeformt und anschließend durch Presshärten nachbearbeitet.

Selbstverständlich kann der Grundkörper auch durch einen Gussprozess hergestellt sein und anschließend durch Presshärten ganz oder abschnittsweise gehärtet und versteift werden.

Eine Aufheizzeit zum Austenitisieren des Grundkörpers beträgt beispielsweise 5-10 min oder dergleichen. Die Austenitisierungstemperatur liegt vorzugsweise in einem Bereich von 880 °C bis 950 °C.

Eine Abkühlzeit in einem steifen Bereich des Grundkörpers liegt etwa zwischen 1 s und 10 s, beispielsweise 3-5 s. Somit wird also ein besonders steifer Bereich des Grundkörpers erzielt. Ein weicherer Bereich des Tragbauteils bzw. des Grundkörpers, beispielsweise im Bereich der Längsenden des Querträgers oder im Bereich der Seitenträger, kann wesentlich länger abkühlen, zum Beispiel mehrere Minuten. Somit kann also durch gezieltes Abkühlen erreicht werden, dass der Grundkörper bzw. das Tragbauteil unterschiedlich steife Bereiche hat.

Der Grundkörper weist beispielsweise eine Blechwand auf, die zwischen 1 mm und 3 mm stark ist, bevorzugt zwischen 1,5 und 2,5 mm.

Der Grundkörper, insbesondere wenn er den Querträger bildet, weist beispielsweise an seinen Längsendbereichen über seinen Querschnitt eine Zugfestigkeit von etwa 400-800 N/mm² auf. Beispielsweise ist also der Querträger an den Längsendbereichen relativ weich bzw. gibt auf Zug nach.

Quermittig oder in einem Quermittenbereich hingegen, insbesondere im Bereich der mindestens einen Halterung oder im Bereich der Halterungen für den Lastenträger (es können beispielsweise zwei Halterungen für Steckarme des Lastenträgers in einem Längsabstand zueinander am Querträger vorgesehen sein) ist der Querträger vorteilhaft wesentlich zugfester, beispielsweise größer als 1200 N/mm², insbesondere größer als 1500 N/mm².

Der Grundkörper kann vorzugsweise mit einer zunderhemmenden Beschichtung versehen sein. Dies verbessert unter anderem die Nachbearbeitung, beispielsweise durch Schweißen oder dergleichen.

Der Grundkörper weist zweckmäßigerweise eine Beschichtung auf Aluminium-Silizium-Basis auf. Auch eine Verzinkung des Grundkörpers ist vorteilhaft. Beides trägt dazu bei, eine Oxidation des Stahl-Bleches bei Erwärmung, beispielsweise auf mehr als 800 °C, was bei dem Presshärten vorkommen kann, zu vermeiden oder zumindest zu verringern. Die Verwendung einer Beschichtung auf AlSi-Basis verhindert die Verzunderung und verringert somit gezielt den Werkzeugverschleiß während der Umformung. Zudem bildet sie, ebenfalls wie eine automobilbautypische Verzinkung von Blech, die Grundlage für einen entsprechenden Korrosionsschutz.

Zweckmäßigerweise weist der Grundkörper mindestens eine Verstärkungsumformung, insbesondere eine Verstärkungssicke, oder Verstärkungsrippe auf. Die Verstärkungsumformung, insbesondere eine Verstärkungssicke, wird bei dem Presshärten in den Grundkörper eingebracht. Sie kann jedoch auch bei einer Kaltumformung bereits eingebracht werden und beispielsweise bei der Presshärtung noch weiter vertieft und/oder warm nachbehandelt werden.

Erfindungsgemäß ist vorgesehen, dass dem Grundkörper des Tragbauteils ein zweiter, insbesondere durch Presshärtung oder ohne Presshärtung hergestellter, Tragkörper gegenüberliegt.

Eine vorteilhafte Ausgestaltung der Trägeranordnung, die in Verbindung mit den Merkmalen des Oberbegriffs des Anspruchs 1 eine an sich eigenständige Erfindung darstellt, sieht vor, dass die Trägeranordnung mindestens ein als ein Mehrkomponentenbauteil ausgebildetes Tragbauteil aufweist, das einen Grundkörper und einen mit dem Grundkörper verbundenen Verstärkungskörper umfasst, der eine Rippenstruktur und/oder einen Schaumkörper aus einem technischen Schaum aufweist.

Der Schaumkörper besteht beispielsweise aus einem offenporigen und/oder einem geschlossenen technischen Schaum. Es ist auch möglich, dass die Rippenstruktur mit einem technischen Schaum verstärkt ist.

Dabei ist ein Grundgedanke, dass ein so genanntes Hybrid-Bauteil bereitgestellt wird, das zwei oder mehrere Komponenten umfasst, nämlich zum einen einen Grundkörper und einen mit dem Grundkörper verbundenen Verstärkungskörper. Selbstverständlich kann das Mehrkomponentenbauteil auch weitere Verstärkungskörper und/oder Grundkörper umfassen. Der Verstärkungskörper umfasst eine Rippenstruktur, zum Beispiel eine Art Fachwerk-Struktur oder einen technischen Schaum oder beides. Somit erfüllt der Verstärkungskörper seine Verstärkungsfunktion, während der Grundkörper sozusagen die Grundstruktur des Tragbauteils bereitstellt.

Bei günstigen Herstellkosten und rationeller und präziser Fertigung sind eine hohe Steifigkeit, Energieabsorption, Belastbarkeit und Stabilität erzielbar.

Der Grundkörper ist beispielsweise als ein Aufnahmekörper ausgebildet, in welchem der Verstärkungskörper aufgenommen ist. Beispielsweise hat der Grundkörper eine Aufnahmevertiefung, in die der Verstärkungskörper eingebracht ist. Die Vertiefung ist beispielsweise im Querschnitt U-förmig. Der Grundkörper kann beispielsweise auch in der Art einer Schale ausgestaltet sein. Die Schale besteht z.B. aus Stahl, Leichtmetall, Kunststoff. Selbstverständlich sind Mischformen der vorgenannten Ausführungsformen möglich. Der eingebrachte, mindestens eine Verstärkungskörper aus Leichtmetall oder Kunststoff verstärkt den Grundkörper.

Der Grundkörper ist beispielsweise durch eine Kaltumformung oder eine Warmumformung oder beides gebildet. Es kann z.B. eine Warmumformung mit kontrolliertem Abschrecken im Werkzeug, also ein Presshärten, vorgesehen sein.

Der Grundkörper kann beispielsweise aus Stahl, Leichtmetall oder Kunststoff bestehen. Der Grundkörper selbst kann an sich schon dünnwandig, leicht und hochfest sein. Der mindestens eine an dem Grundkörper angeordnete Verstärkungskörper erhöht die Steifigkeit des Tragbauteils. So kann beispielsweise eine dünnwandige Metallkonstruktion des Grundkörpers durch eine Versteifung aus Kunststoff so verstärkt werden, dass sie die durch die Anhängekupplung oder den Lastenträger verursachten Kräfte, Aufprallkräfte bei einem Unfall oder dergleichen ohne weiteres aufnehmen kann.

Der Grundkörper kann zur Gewichtsreduzierung Aussparungen aufweisen. Schon beim Zuschnitt von Platinen zur Herstellung des Grundkörpers oder durch Nachbearbeitung des Grundkörpers können vorteilhaft weitere Potenziale zur Massereduzierung durch lokale Ausnehmungen genutzt werden. Z.B. durch eine entsprechende Werkzeugkontur können auch lokale Ausformungen insbesondere als Schale ausgebildeten Grundkörper erzeugt werden, die zur strukturellen Steifigkeitserhöhung beitragen.

Der Verstärkungskörper hat zweckmäßigerweise mindestens einen Kontakt-Wandabschnitt zur flächigen Anlage, insbesondere flächigen Verbindung, mit einem Grundkörper-Wandabschnitt des Grundkörpers. Damit können also der Verstärkungskörper und der Grundkörper flächig aneinander liegen. Beispielsweise erstreckt sich die Rippenstruktur des Verstärkungskörper von dem Kontakt-Wandabschnitt weg.

Der Grundkörper umfasst zweckmäßigerweise mindestens zwei zueinander winkelige oder einander gegenüberliegende Grundkörper-Wandabschnitte, an denen Kontakt-Wandabschnitte des Verstärkungskörpers flächig anliegen. Beispielsweise kann der Grundkörper im Querschnitt L-förmig sein, U-förmig sein oder dergleichen.

Der Verstärkungskörper hat zumindest dort, wo er in Kontakt mit dem Grundkörper gelangt, zweckmäßigerweise dieselbe Querschnittskontur, so dass die beiden Teile flächig aneinander anliegen können.

Der Grundkörper und der Verstärkungskörper bestehen vorteilhaft aus unterschiedlichen Werkstoffen.

Beispielsweise besteht der Grundkörper aus einem metallischen Werkstoff, während der Verstärkungskörper aus einem Kunststoffmaterial besteht.

Es ist aber z.B. auch möglich, dass der Grundkörper und der Verstärkungskörper aus Kunststoff oder Leichtmetall bestehen, jedoch unterschiedlicher Qualität. Beispielsweise besteht der Grundkörper aus Stahl, während der Verstärkungskörper aus Leichtmetall hergestellt ist.

Der Grundkörper kann auch z.B. aus einem faserverstärkten Kunststoff oder unverstärkten Kunststoff bestehen.

Bei dem Verstärkungskörper ist es vorteilhaft, wenn der Verstärkungskörper aus einem Kunststoff besteht, vorzugsweise aus einem faserverstärktem Kunststoff.

Selbstverständlich ist es auch beim Verstärkungskörper möglich, dass er selbst als ein Hybrid-Körper oder Mehrkomponentenkörper ausgebildet ist, d.h. beispielsweise aus unterschiedlichen Materialien besteht.

Der Verstärkungskörper ist zweckmäßigerweise integral mit mindestens einem Befestigungselement versehen, zum Beispiel einem Haken, einem Schnapphaken, einer Schraubaufnahme, einer Kabelklemme oder dergleichen. Das Befestigungselement ist mit dem Verstärkungskörper einstückig. Der Verstärkungskörper kann auch eine Halteaufnahme für ein Bauteil, zum Beispiel ein Kabel, aufweisen, das an der Trägeranordnung zu befestigen ist. Somit kann also das zusätzliche Bauteil, zum Beispiel das Kabel, geschützt in dem Verstärkungskörper untergebracht werden. Wenn der Verstärkungskörper also gegossen wird, z.B. in einem Spritzgießverfahren, ergibt sich die Möglichkeit, beliebige Zusatzfunktionen wie beispielsweise Befestigungselemente, Lagerstellen, Schraubverbindungen, Kabelklemmen usw. in einem Arbeitsgang zu integrieren. Dadurch ist es möglich, zeit- und kostenintensive Nachbearbeitungs- und Montageprozesse einzusparen.

Der Grundkörper ist zweckmäßigerweise als ein Umformteil ausgebildet oder weist ein Umformteil auf. Der Verstärkungskörper hingegen ist vorzugsweise als ein Strangpress-Bauteil, ein Extrusionsbauteil oder Gussbauteil ausgebildet. Der Verstärkungskörper wird zweckmäßigerweise durch Spritz- bzw. Druckgießen und/oder verwandte Urformverfahren hergestellt.

Bei dem Verstärkungskörper, insbesondere der Rippenstruktur oder Seitenwänden des Verstärkungskörpers, sind unterschiedliche Wandstärken, auch an ein und derselben Wand einer Rippe oder Seitenwand, möglich. Die gezielt definierten Wandstärken der Verstärkung durch den Verstärkungskörper ermöglichen eine Anpassung des Steifigkeitsverlaufs an den Kraft- und Spannungsverlauf im Tragbauteil, insbesondere im Querträger. Auch eine gezielt homogene Einleitung der Kräfte und Momente in die Karosserie ist möglich.

Der Grundkörper des Tragbauteils ist zweckmäßigerweise mit einem ersten und einem zweiten Verstärkungskörper verstärkt, wobei die Verstärkungskörper eine gleiche oder eine unterschiedliche Steifigkeit aufweisen können. Somit können also beispielsweise mehrere Verstärkungskörper gleicher Bauart oder unterschiedlicher Bauart hergestellt und am Grundkörper montiert werden. Auf diesem Wege lassen sich z.B. unterschiedlich steife Abschnitte des Tragbauteils herstellen, ohne dass am Grundkörper besondere Maßnahmen notwendig sind, wobei selbstverständlich auch der Grundkörper über seine Längserstreckungsrichtung oder in anderen Richtungen unterschiedliche Steifigkeiten aufweisen kann, z.B. durch entsprechenden Materialeinsatz, passende Geometrien, pressgehärtete Abschnitte oder dergleichen.

Die Rippenstruktur weist zweckmäßigerweise Rippen auf oder ist durch Rippen gebildet, deren Schmalseiten zu Seitenwänden des Verstärkungskörpers oder des Grundkörpers orientiert sind, so dass sich die Seitenwände auf den Schmalseiten der Rippen abstützen.

Bevorzugt ist es, wenn die Rippen der Rippenstruktur im am Fahrzeug montierten Zustand der Trägeranordnung im Wesentlichen horizontal verlaufen.

Bevorzugt ist es, wenn der Verstärkungskörper formschlüssig in dem Grundkörper aufgenommen ist. Somit ist über einen großen Kontaktbereich eine Verbindung zwischen dem Verstärkungskörper und dem Grundkörper möglich.

Beispielsweise ist der Grundkörper mit dem Verstärkungskörper umspritzt oder der Verstärkungskörper ist an den Grundkörper angegossen. Es ist auch möglich, dass der Verstärkungskörper in einen Innenraum des Grundkörpers durch Spritzen oder Gießen eingebracht ist. Beispielsweise ist der Grundkörper seitlich offen, so dass von dort her der Verstärkungskörper durch einen Spritzvorgang einbringbar ist. Mit dem Anspritzen von rippenförmigen Verstärkungen und Versteifungen aus Kunststoff kann eine dünnwandige Struktur des z.B. metallischen oder aus insbesondere faserverstärktem Kunststoff bestehenden Grundkörpers mit wenig zusätzlichem Gewicht sehr effektiv stabilisiert werden.

Der Grundkörper und der Verstärkungskörper können jedoch auch als zwei voneinander separate Bauteile hergestellt und anschließend zu dem mindestens einen Tragbauteil zusammengefügt sein. Auf diese Weise ist es beispielsweise möglich, den Grundkörper zunächst durch einen Umformprozess, einen Schmiedeprozess oder dergleichen herzustellen und anschließend den Verstärkungskörper oder die Verstärkungskörper in den Grundkörper einzubringen.

Der Verstärkungskörper und der Grundkörper sind beispielsweise miteinander verschweißt, aneinander angeklebt oder dergleichen. Ferner kann der Verstärkungskörper beispielsweise mit dem Grundkörper vernietet werden. Ferner ist es möglich, dass der Verstärkungskörper beispielsweise thermoplastisch mit dem Grundkörper verbunden wird. Beispielsweise stehen von dem Verstärkungskörper Vorsprünge ab, die mit dem Grundkörper verschmolzen werden. Selbstverständlich sind auch andere Verschmelzpunkte ohne weiteres realisierbar.

Es können auch beispielsweise Rastvorsprünge, Hakenvorsprünge oder dergleichen am Grundkörper und/oder Verstärkungskörper vorgesehen sein, um die beiden Bauteile miteinander zu verhaken oder zu verrasten. Ferner können die beiden Bauteile auch durch weitere Verfahren miteinander verbunden werden, zum Beispiel durch Kleben und/oder durch Clinchen und/oder durch Stanznieten und/oder durch Falzen oder jede beliebige Kombinationen davon. So kann zum Beispiel eine Clinch- oder Stanzniet-Verbindung zusätzlich verklebt sein, eine Falz-Verbindung zusätzlich durch eine Verrastung verbessert sein oder dergleichen.

Es ist vorteilhaft, wenn ein Innenraum des Grundkörpers, in dem der Verstärkungskörper angeordnet ist, durch eine Abdeckung verschlossen ist. Diese Abdeckung kann beispielsweise durch eine Folie oder eine Wand gebildet sein, so dass der im Innenraum angeordnete Verstärkungskörper, beispielsweise dessen Rippenstruktur, nicht verschmutzt. Die Abdeckung kann aber auch durch einen weiteren, insbesondere komplementären, Grundkörper oder Tragkörper gebildet sein, der mit dem anderen Grundkörper fest verbunden wird, beispielsweise verschweißt, verklebt oder dergleichen. Dadurch wird eine besonders tragfähige Konstruktion geschaffen.

Eine vorteilhafte Ausgestaltung der Trägeranordnung, die in Verbindung mit den Merkmalen des Oberbegriffs des Anspruchs 1 eine an sich eigenständige Erfindung darstellt, sieht vor, dass die Trägeranordnung mindestens ein Tragbauteil mit einem Grundkörper aufweist, der eine Tragwand und eine integral an die Tragwand durch ein Urform-Verfahren, insbesondere durch ein Gussverfahren, und/oder ein Umformverfahren, z.B. durch Strangpressen und/oder durch Schmieden, angeformte Rippenstruktur aufweist, wobei das Tragbauteil einen Bestandteil des Querträgers bildet und sich bis zur Quermitte des Querträgers erstreckt.

Ein derartiger Grundkörper mit einer Tragwand und integral an die Tragwand angeformten Rippenstruktur ist besonders belastbar. Es ist eine integrale Verbindung zwischen den Rippen und der Tragwand vorhanden, so dass diese besonders gut verstärkt ist.

Das Tragbauteil kann in seiner Kontur optimal an die Kontur des Fahrzeugs angepasst sein, beispielsweise eine geeignete Krümmung aufweisen oder dergleichen.

An das Tragbauteil können integral Befestigungselemente zur Befestigung am Fahrzeug angeformt sein.

Der Grundkörper bzw. das Tragbauteil ist beispielsweise durch einen Druckguss, einen Kokillenguss, einen Niederdruckguss, durch Pressgießen oder dergleichen hergestellt. Auch ein Spritzgussverfahren ist ohne weiteres möglich. Selbstverständlich kann das Tragbauteil auch im Rahmen eines Strangpress-Verfahrens hergestellt werden.

Weiter vorteilhaft ist ein Semi-Solid-Verfahren mit gleichzeitiger Flüssig- und Festphase, also eine Mischung aus Urformen und Umformen.

Ferner vorteilhaft ist ein Gießen und anschließendes Schmieden und/oder Pressen des Grundkörpers.

Besonders bevorzugt ist es, wenn der Grundkörper Aluminium, Magnesium oder deren Legierungen umfasst.

Besonders bevorzugt sind so genannte Knetlegierungen.

Bevorzugt ist es, wenn der Grundkörper durch Pressgießen hergestellt ist. Durch dieses auch als Squeeze-Casting bezeichnete Verfahren entstehen keine oder kaum Lunker, Verwirbelungen und dergleichen Gefügebeeinträchtigungen. Eine nachfolgende Wärmebehandlung, wie beispielsweise beim Umformen, insbesondere Schmieden, ist dann mit Vorteil ohne weiteres möglich.

Die Rippenstruktur umfasst zweckmäßigerweise schräg zur Tragwand verlaufende, beispielsweise plattenartige oder wandartige, Rippen. Selbstverständlich können die Rippen auch durch Stege gebildet sein, so dass sie eine Art Stangengestalt haben.

Die Rippen sind vorzugsweise miteinander verbunden. Die Rippenstruktur ist vorzugsweise in der Art eines Fachwerks ausgestaltet.

Die Rippen der Rippenstruktur verlaufen zweckmäßigerweise im am Fahrzeug montierten Zustand der Trägeranordnung vertikal. Somit verlaufen Rippen also quasi von oben nach unten.

Der Grundkörper weist zweckmäßigerweise mindestens eine der Tragwand gegenüberliegende oder zu der Tragwand winkelige zweite Wand auf. Die Rippenstruktur ist in dem Urform-Verfahren oder durch das Schmieden integral an die mindestens eine zweite Wand angeformt. Dadurch entsteht ein insgesamt hoch belastbares Gebilde.

Die Tragwand bildet zweckmäßigerweise einen Bestandteil einer Tragwandanordnung, die einen Innenraum umschließt, in welchem die Rippenstruktur angeordnet ist. Die Wände sind beispielsweise in einer U-Form angeordnet.

Der Querträger weist zweckmäßigerweise mindestens zwei Tragbauteile auf, die an ihren Längsenden miteinander verbunden sind.

Die mindestens eine Halterung ist zweckmäßigerweise zwischen den beiden Tragbauteilen angeordnet. Die Halterung dient beispielsweise zur Verbindung der beiden Tragbauteile. Die Halterung ist vorteilhaft ein Strukturbauteil zur Verstärkung des Querträgers.

Ein erfindungsgemäßes Tragbauteil kann die Halterung auch ganz oder teilweise bereitstellen. Z.B. kann die Halterung als ein Lagergehäuse für eine bewegliche Anhängekupplung, eine Steckaufnahme für einen Kupplungsarm oder in einem Tragbauteil ausgebildet sein. Auch zwei, z.B. in Längsrichtung, nebeneinander angeordnete Tragbauteile können die Halterung oder eine Aufnahme für die Halterung bilden.

Die Halterung kann beispielsweise ein Gussteil oder ein Drehteil, insbesondere aus einer Knetlegierung, sein. Die Halterung kann beispielsweise mit dem erfindungsgemäßen Tragbauteil vergossen sein, an dieses angelötet sein oder dergleichen. Auch Klebetechniken sind ohne weiteres möglich.

Zur Verbindung eines Tragbauteils mit einem anderen Tragbauteil oder einem sonstigen benachbarten Bauteil, das beispielsweise ein Bestandteil der Trägeranordnung bildet, ist es vorteilhaft, wenn an dem Tragbauteil ein Montageflansch vorhanden ist.

Zwei Tragbauteile können beispielsweise miteinander verschweißt, verlötet, verklebt oder verschraubt sein. Weiterhin ist es möglich, einen so genannten Verbundguss durchzuführen, um 2 Tragbauteile miteinander zu verbinden.

Das mindestens eine Seitenteil ist vorteilhaft als ein Crashprofil zur Verformung bei einem Aufprall ausgestaltet oder weist ein solches Crashprofil auf.

Durch die obigen Maßnahmen, die in jeder beliebigen Kombination möglich sind, kann eine besonders vorteilhafte Ausgestaltung des Querträgers erzielt werden.

So kann der Querträger beispielsweise ausschließlich durch eines oder mehrere Tragbauteile hergestellt sein, die durch Presshärten hergestellt sind oder in deren Herstellungsprozess die Presshärtung einen Prozessschritt darstellt.

Ferner ist es auch möglich, den Querträger beispielsweise durch eines oder mehrere Tragbauteile herzustellen, die aus einem Grundkörper mit einem oder mehreren Verstärkungskörpern bestehen. Ferner kann bei dem Querträger mindestens ein Tragbauteil mit einem Grundkörper vorgesehen sein, der einen Grundkörper aufweist, an dem an einer Tragwand integral eine Rippenstruktur angeformt ist, beispielsweise durch ein Urform-Verfahren, zum Beispiel ein Gussverfahren, oder ein Umform-Verfahren, z.B. Schmieden oder Strangpressen, oder dergleichen.

Selbstverständlich sind beliebige Kombinationen davon möglich, so dass beispielsweise ein pressgehärteter Grundkörper auch mit einem Verstärkungskörper versehen ist und/oder zum Beispiel dass ein Grundkörper, der durch ein Gussverfahren hergestellt ist, zusätzlich noch einem Presshärtungsschritt unterzogen wird, so dass er zumindest partiell eine größere Steifigkeit und Härte aufweist als vor diesem Bearbeitungsschritt.

Die erfindungsgemäßen Maßnahmen ermöglichen eine optimale Anpassung der Eigenschaften des Querträgers an seine jeweilige Beanspruchung. Dadurch kann bei geringem Materialeinsatz und/oder günstigen Abmessungen z.B. folgendes leicht erzielt werden:
Der Querträger weist vorteilhaft im Bereich der mindestens einen Halterung und/oder quermittig oder in einem Quermittenbereich eine höhere Steifigkeit und/oder einen größeren Querschnitt und/oder ein höheres Widerstandsmoment auf als an seinen Längsenden.

Quermittig ist so zu verstehen, dass hier die Fahrzeugquerrichtung gemeint ist. Bezieht man die Formulierung auf die Längserstreckung des Querträgers, könnte man auch von einer Längsmitte sprechen.

Zweckmäßigerweise weist der Querträger entlang seiner Längserstreckungsachse zwischen seinen Längsenden bei einer auf ihn wirkenden Kraft eine etwa konstante Spannung auf. Dies betrifft eine oder mehrere Spannungen, z.B. eine Torsionsspannung, eine Biegespannung, eine Druck- oder Zugspannung oder dergleichen. Der Querträger ist also über seine Längserstreckung, jedenfalls über diejenige Längserstreckung, die sich zwischen den Seitenträgern erstreckt, ein im Wesentlichen gleichmäßig belastbares Bauteil. Der Querträger ist also bei günstigem Materialeinsatz, kleinen Maßen und leichter Bauweise mechanisch ideal belastbar.

Durch einen Verstärkungskörper, Presshärten oder dergleichen ist es sogar möglich, die obigen Eigenschaften bei z.B. gleichem Querschnitt des Tragbauteils, insbesondere des Querträgers, herzustellen. Aber auch geometrische Maßnahmen sind vorteilhaft:
Der Querträger weist zweckmäßigerweise eine Tragwand und eine der Tragwand gegenüberliegende Wand auf. Ein Abstand zwischen der Tragwand und der gegenüberliegenden Wand ist im Bereich einer Quermitte des Querträgers größer als im Bereich der Längsenden des Querträgers.

Eine Rippenstruktur des Querträgers weist vorteilhaft im Bereich der Quermitte eine höhere Steifigkeit auf als im Bereich der Längsenden des Querträgers. Die Rippenstruktur kann z.B. einen Bestandteil eines Verstärkungskörpers und/oder an eine Wand eines Grundkörpers des Querträgers integral angeformt sein. Beispielsweise sind die Rippen im Bereich der Quermitte dichter und/oder haben einen größeren Querschnitt und/oder eine andere Geomterie und/oder räumliche Anordnung zueinander als im Bereich der Längsenden des Querträgers.

Das mindestens eine Tragbauteil bildet zweckmäßigerweise einen Bestandteil des Querträgers und/oder mindestens eines Seitenträgers und/oder der Halterung. Mithin kann also das erfindungsgemäße Tragbauteil an verschiedenen Komponenten der Trägeranordnung mit Vorteil eingesetzt werden. Besonders bevorzugt ist es, wenn das Tragbauteil einen Bestandteil des Querträgers oder den Querträger als ganzes bildet.

Das Tragbauteil kann auch mehrteilig sein oder ein Bauteil der Trägeranordnung, z.B. der Querträger oder ein Seitenträger, kann durch mehrere Tragbauteile gebildet sein, die miteinander verbunden werden:
Ein erstes und ein zweites Teil des Tragbauteils, z.B. zwei Teile des Grundkörpers und/oder der Grundkörper und der Verstärkungskörper, oder zwei Tragbauteile sind vorteilhaft durch eine Schweißverbindung und/oder eine Schraubverbindung und/oder eine Niet-Verbindung und oder durch mechanisches Fügen und/oder thermisches Fügen und/oder durch Hybridfügen mittels eines Klebstoffes miteinander verbunden.

Die Trägeranordnung umfasst zweckmäßigerweise die Anhängekupplung. Beispielsweise ist ein Kuppelkörperträger, an dem ein Kuppelkörper, zum Beispiel eine Kupplungskugel, angeordnet ist, lösbar mit der Trägeranordnung verbindbar, beispielsweise an die Halterung oder eine an der Halterung angeordnete Steckaufnahme ansteckbar. Der Kuppelkörperträger kann also abnehmbar, insbesondere steckbar, oder fest am Kraftfahrzeug montiert sein. Ferner kann der Kuppelkörperträger, zum Beispiel ein Kupplungsarm auch an einem Lager dergestalt gelagert sein, dass der Kuppelkörperträger zwischen einer Gebrauchsstellung und einer Nichtgebrauchsstellung verstellbar gelagert ist. In der Nichtgebrauchsstellung ist der Kuppelkörperträger bzw. auch der Kuppelkörper beispielsweise unter einer Heckschürze oder einem Heck-Stoßfänger des Kraftfahrzeuges verborgen, jedenfalls gegenüber Sicht im Wesentlichen abgedeckt, so dass eine optisch ansprechende Gestaltung getroffen ist. In der Betriebsstellung hingegen steht der Kuppelkörper nach hinten vor das Fahrzeug vor, beispielsweise nach hinten vor einen Stoßfänger, so dass der Anhänger angehängt werden kann. Das Lager ist beispielsweise ein Schwenklager, ein Schiebelager oder eine Kombination davon, zum Beispiel ein Schwenk-Schiebe-Lager. Das Lager kann einen Bestandteil der Halterung der Trägeranordnung bilden oder an der Halterung befestigbar sein.

Nachfolgend werden Ausführungsbeispiele der Erfindung anhand der Zeichnung erläutert. Es zeigen:
- Figur 1: eine perspektivische Schrägansicht einer ersten Trägeranordnung mit einer Anhängekupplung,
- Figur 2: eine Seitenansicht der Trägeranordnung gemäß Figur 1,
- Figur 3: eine hintere Frontal-Ansicht auf einen Querträger der Trägeranordnung gemäß Figur 1,
- Figur 4: eine vordere Frontal-Ansicht auf einen Querträger der Trägeranordnung gemäß Figur 1,
- Figur 5: eine perspektivische Hinter-Ansicht eines Verstärkungskörpers der Trägeranordnung,
- Figur 6: eine Seitenansicht auf den Verstärkungskörper gemäß Figur 5,
- Figur 7: eine hintere Frontal-Ansicht auf den Verstärkungskörper gemäß Figur 5,
- Figur 8: eine vordere Frontalansicht auf den Verstärkungskörper gemäß Figur 5,

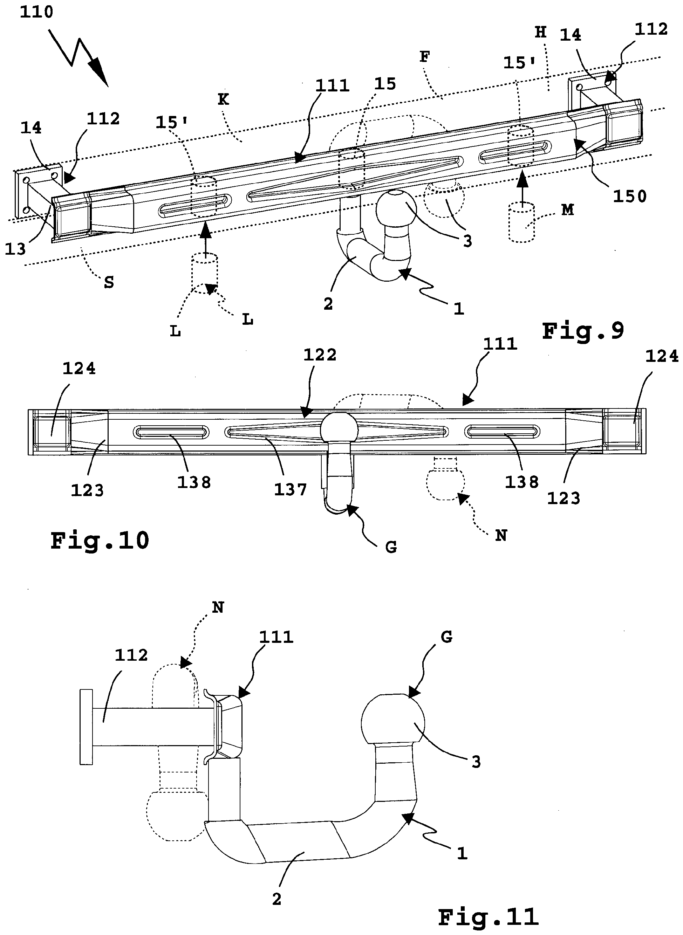

- Figur 9: eine perspektivische Schrägansicht einer zweiten Trägeranordnung mit einer Anhängekupplung, die in
- Figur 10: frontal von vorn und in
- Figur 11: von der Seite her dargestellt ist,

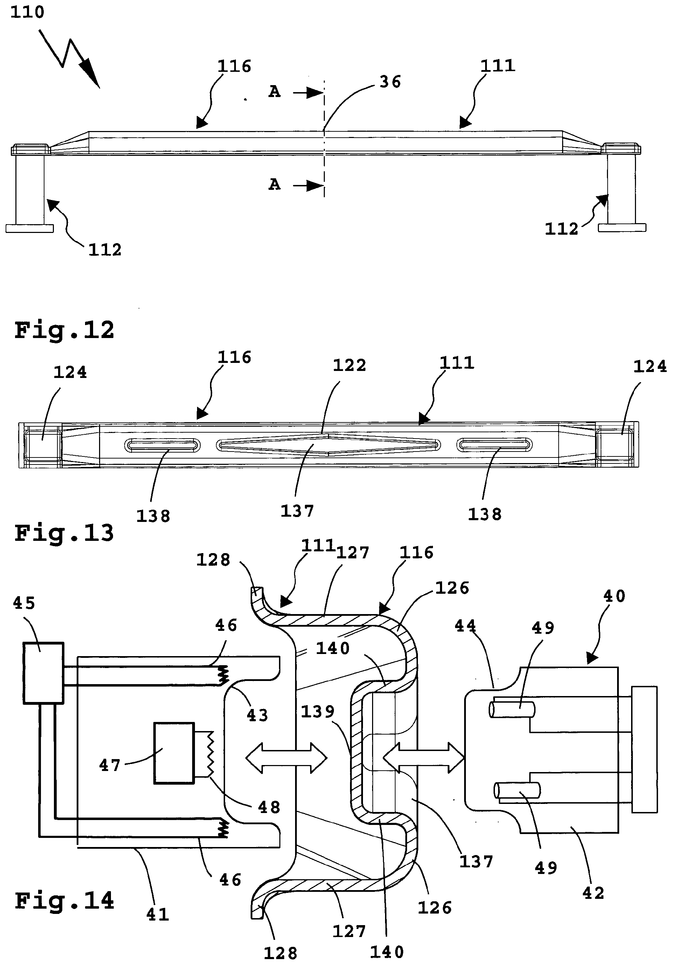

- Figur 12: eine Draufsicht von oben auf die Trägeranordnung gemäß Figur 9,
- Figur 13: die Trägeranordnung gemäß Figur 10 ohne Anhängekupplung,
- Figur 14: eine Seitenansicht auf die Trägeranordnung gemäß Figur 13,

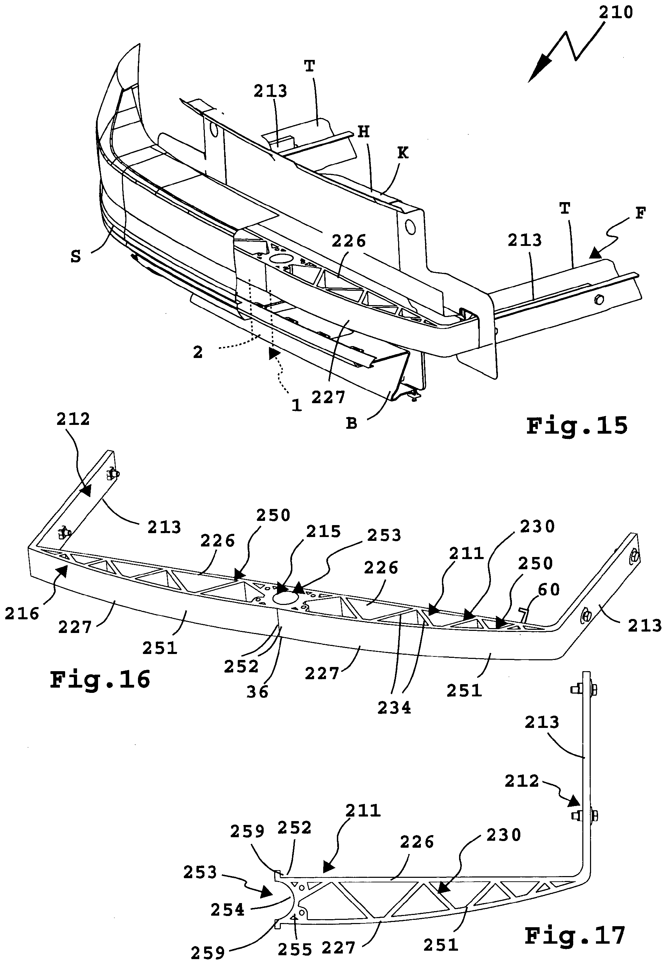

- Figur 15: eine perspektivische Schrägansicht auf eine dritte Trägeranordnung mit einer schematisch dargestellten Anhängekupplung in einem an einem Fahrzeug eingebauten Zustand,
- Figur 16: die Trägeranordnung gemäß Figur 14 perspektivisch von schräg oben,
- Figur 17: ein Teilsegment der Trägeranordnung gemäß Figur 16 in einer modifizierten Bauform,
- Figur 18: eine perspektivische Schrägansicht von unten und
- Figur 19: eine perspektivische Schrägansicht von oben auf eine vierte Trägeranordnung.

In der Zeichnung sind Trägeranordnungen 10, 110, 210, 310 dargestellt, an denen beispielsweise eine Anhängekupplung 1 mit einem Kugelhals 2 und einem Kugelkopf 3 oder einem sonstigen Kuppelelement anordenbar oder angeordnet ist, oder aber auch beispielsweise einen Lastenträger L anordenbar ist. Die Trägeranordnungen 10, 110, 210, 310 haben teilweise gleiche oder gleichartige Komponenten, die mit denselben Bezugsziffern versehen sind, teilweise mit Bezugsziffern, die sich um jeweils 100 voneinander unterscheiden.

Die Trägeranordnungen 10, 110, 210, 310 haben Querträger 11, 111, 211, 311 von denen sich Seitenträger 12, 112, 212, 312 weg erstrecken, die zur Montage an einem Fahrzeug F vorgesehen sind. Im am Fahrzeug F montierten Zustand sind die Trägeranordnungen, insbesondere die Querträger 11, 111, 211, 311, hinter einem Stoßfänger S des Fahrzeugs F verborgen, der teilweise schematisch dargestellt ist. Beispielsweise sind die Seitenträger 12, 112, 212, 312 an Längsträgern T oder an einer Heckwand H einer Karosserie K des Fahrzeugs F befestigt, zum Beispiel verschraubt.

Im Bereich einer Quermitte (bezogen auf das Fahrzeug F) der Querträger 11, 111, 211, 311 ist eine Halterung 15, 215, 315 zur Befestigung der Anhängekupplung 1 vorgesehen. Die Halterung 15, 215, 315 umfasst beispielsweise eine Steckaufnahme, in die ein Steckvorsprung einer Kugelstange einsteckbar ist. Selbstverständlich kann die Halterung 15, 215, 315 auch als eine Halterung für ein Schwenklager, Schiebelager oder dergleichen vorgesehen sein, so dass die Anhängekupplung 1 zwischen der in durchgezogenen Linien dargestellten Gebrauchsstellung G zum Ziehen eines Anhängers und einer Nichtgebrauchsstellung N, die in gestrichelten Linien dargestellt ist, verstellbar an der Trägeranordnung 10-310 gelagert ist. Selbstverständlich kann eine Anhängekupplung auch fest am Querträger 11-311 befestigt sein.

Das erfindungsgemäße Trägerkonzept eignet sich aber auch für Lastenträger, die beispielsweise Kupplungsteile M aufweisen, die an zum Beispiel als Steckaufnahmen oder sonstigen Kupplungsteile ausgestalteten Halterungen 15' befestigbar, zum Beispiel in die Steckaufnahmen einsteckbar sind. Das Trägerkonzept ist hoch belastbar, so dass auch ein schwererer Lastenträger getragen werden kann, was nachfolgend noch deutlich wird.

Die Seitenträger 12 und 112 sind baugleich und umfassen beispielsweise einen Tragarm 13, der einerseits mit dem Querträger 11 oder 111 verbunden ist und an seiner anderen, freien Seite eine Tragplatte 14 zur Befestigung an der Karosserie K des Fahrzeugs F aufweist. An der Tragplatte 14 sind beispielsweise Bohrungen zum Durchstecken von Schrauben vorgesehen. Darauf kommt es jedoch nicht an.

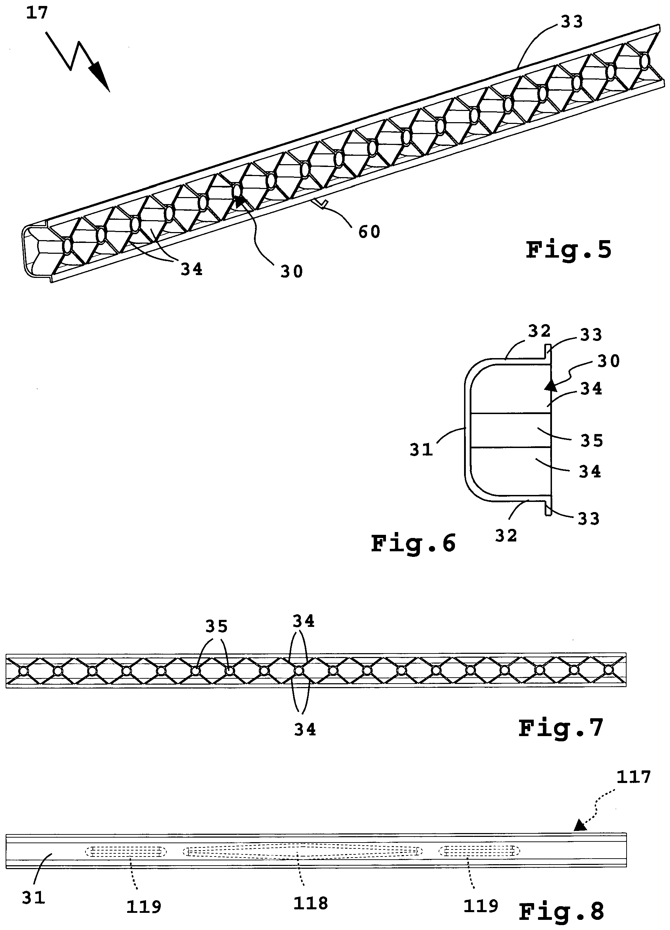

Der Querträger 11 umfasst einen Grundkörper 16, der als ein Aufnahmekörper für Verstärkungskörper 17, 18, 19 ausgestaltet ist. Der Verstärkungskörper 17 ist in den Figuren 5-8 detailliert dargestellt. Der Verstärkungskörper 17 ist beispielsweise in einem Quermittenbereich 20 des Querträgers 11 angeordnet, während die Verstärkungskörper 18 und 19 neben dem Verstärkungskörper 17 in Richtung der beiden Längsenden 21 des Querträgers angeordnet sind.

Der Grundkörper 16 und die Verstärkungskörper 17-19 bilden ein Mehrkomponenten-Tragbauteil 50.

Der Grundkörper 16 ist beispielsweise als ein Blech-Umformteil ausgestaltet und weist einen mittleren Abschnitt 22 mit etwa konstanter Querschnittskontur auf. Zu den Längsenden 21 des Querträgers 11 hin verjüngt sich das Profil des Grundkörpers 16. An den mittleren Abschnitt 22 schließen sich daher seitliche Abschnitte 23 an, die eine konische Gestalt haben. An die seitlichen Abschnitte 23 schließen sich Montageabschnitte 24 an, die mit den Seitenträgern 12 verbunden sind. Beispielsweise sind die Montageabschnitte 24 mit den Seitenträgern 12 verschweißt, verklebt, verschraubt oder dergleichen.

Der Grundkörper 16 ist vorliegend als ein einstückiges Bauteil ausgestaltet, wobei selbstverständlich auch eine mehrteilige Bauweise über eine Längserstreckung 25 des Querträgers 11 oder quer zu dieser Längserstreckung 25 ohne weiteres möglich ist.

Der Grundkörper 16 hat in den Abschnitten 22 und 23 eine im Querschnitt U-förmige Gestalt mit einer Bodenwand, die eine erste Tragwand 26 bildet, und von der seitliche Schenkel in Gestalt von Tragwänden 27 abstehen. Zwischen den Tragwänden 26 und 27 ist der Grundkörper 16 ausgerundet, so dass eine homogene, gleichmäßige Struktur entsteht. Von den Tragwänden 27 stehen seitlich noch Flanschschenkel 28 ab.

Beispielsweise ist der Grundkörper 16 als ein Umformteil ausgestaltet, wobei selbstverständlich alternativ auch ein Gussteil, Schmiedeteil oder dergleichen möglich wäre. Vorzugsweise besteht der Grundkörper 16 aus Metall, insbesondere Stahl, wobei auch andere Materialien, zum Beispiel Kunststoffe, insbesondere faserverstärkte Kunststoffe, ohne weiteres möglich sind.

Die Verstärkungskörper 17-19 passen formschlüssig in einen Innenraum 29 des Querträgers 11, so dass sie dort optimalen Halt finden. Die Verstärkungskörper 17-19 sind beispielsweise Gussteile, Strangpress-Bauteile, Extrusionsbauteile oder dergleichen.

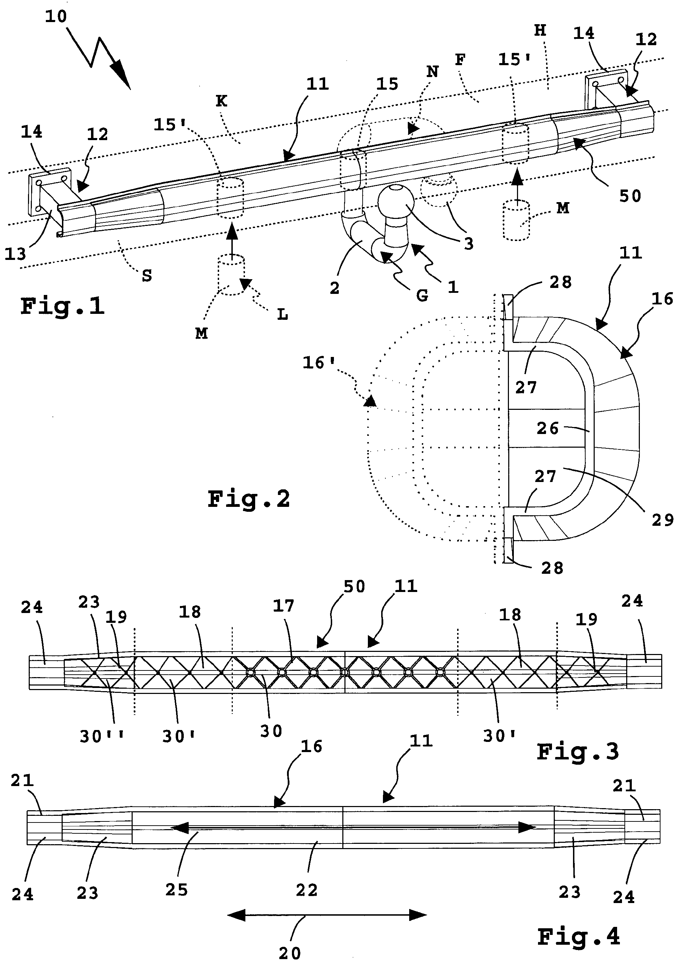

Am Beispiel des Verstärkungskörpers 17 soll dieses Konzept erläutert werden. Die anderen Verstärkungskörper 18 und 19 sind im Prinzip ähnlich aufgebaut. In Figur 3 ist zum besseren Verständnis, wo die Trennlinien sozusagen zwischen den einzelnen Verstärkungskörpern 17,18 und 19 sind, gestrichelte Linien eingezeichnet. Selbstverständlich wäre es auch möglich, einen einstückigen Verstärkungskörper anstelle von beispielsweise zwei oder drei oder aller Verstärkungskörper 17-19 vorzusehen. Das modulare Konzept ermöglicht es jedoch, die Verstärkungskörper mit relativ einfachen Werkzeugen bzw. kostengünstigen Werkzeugen herzustellen. Dennoch erfüllen sie ihre Stabilisierung- und Verstärkungsfunktion beim Querträger 11.

Der Verstärkungskörper 17 weist beispielsweise eine zur Tragwand 26 passende Bodenwand 31 auf, an die sich seitliche Schenkel-Wände 32 anschließen, von denen Flanschschenkel 33 seitlich abstehen. Die Außenkontur des Verstärkungskörpers 17, sozusagen seine Passkontur, die zum Innenraum 29 passt, entspricht der Innenkontur des Innenraums 29. Mithin liegen also die Wände 31 und 32 des Verstärkungskörpers 17 an den Innenseiten der Tragwände 26 und 27 zum Innenraum 29 hin an. Auch die Flanschschenkel 28 und 33 liegen vorzugsweise flächig aufeinander, wobei dies eine optionale Maßnahme darstellt.

In einem Innenraum des Verstärkungskörpers 17, der durch die Bodenwand 31 sowie die beiden seitlichen Wände 32 begrenzt wird, ist eine Rippenstruktur 30 angeordnet. Die Rippenstruktur 30 umfasst mit ihren Stirnseiten an die Bodenwand 31 angrenzende, wandartige Rippen 34. Die Rippen 34 verlaufen diagonal zwischen den beiden seitlichen Wänden 32.

Die Rippen 34 erstrecken sich im am Fahrzeug F montierten Zustand der Trägeranordnung 10 horizontal, d.h. ihre freien Stirnseiten sowie mit der Bodenwand 31 verbundenen Stirnseiten verlaufen vertikal. Eine andere Orientierung der Rippen oder einzelner Rippen ist je nach Steifigkeitsanforderung ohne weiteres möglich.

An Kreuzungspunkten zwischen den Rippen 34 sind knotenartige Verstärkungen 35 vorgesehen, beispielsweise in der Gestalt von Röhren oder Hülsen. Diese Maßnahme ist jedoch optional. Beispielsweise sind bei Rippenstrukturen 30' und 30" der Verstärkungskörper 18 und 19 keine Verstärkungen vorgesehen.

Weiterhin sind die Rippen der Rippenstrukturen 30' und 30" etwas schwächer, d.h. weniger dick als die Rippen 34, weil im Quermittenbereich 20 eine höhere Steifigkeit des Querträgers 11 zweckmäßiger ist als im Bereich der Längsenden 21. Somit ist also in optimaler Weise dafür Sorge getragen, dass Verstärkungskörper in der jeweils gewünschten Belastbarkeit und Steifigkeit verwendet werden.

Selbstverständlich können auch andere Geometrien von Rippen mit Vorteil verwendet werden, beispielsweise Wabenstrukturen, Zickzack-Strukturen oder dergleichen, ähnlich wie z.B. bei den Rippenstrukturen der Fall, die bei den Trägeranordnungen 210 und 310 dargestellt sind.

Die Verstärkungskörper 17-19 sind beispielsweise in den Grundkörper 16 eingeklebt, mit diesem verschweißt oder dergleichen. Auch Clinchen oder dergleichen andere Befestigungstechniken, zum Beispiel Nieten, sind ohne weiteres möglich. Ferner wäre es auch möglich, den Verstärkungskörper 17 oder 18 oder 19 an den Grundkörper 16 anzuspritzen, beispielsweise in den Innenraum 29 einzuspritzen.

Eine besonders gute Verstärkung erreicht man beispielsweise auch dadurch, wenn an dem Grundkörper 16 ein zweiter Grundkörper 16' angeordnet ist, wie in Figur 2 angedeutet. Dieser zweite Grundkörper 16', der auch mit einem Verstärkungskörper oder mehreren Verstärkungskörpern ausgesteift sein kann, verdeckt zugleich die sozusagen offene Seite des Grundkörpers 16, in die die Verstärkungskörper 17-19 eingebracht sind und wirkt somit als Deckel. Selbstverständlich könnte man anstelle des zweiten Grundkörpers 16' auch eine sonstige Abdeckung zur Abdeckung der Rippenstruktur 30-30' anordnen, zum Beispiel eine Folie, eine Platte oder dergleichen.

Der Querträger 111 der Trägeranordnung 110 ist mit einem alternativen Versteifungskonzept ausgestattet, bei dem auch ohne Verstärkungskörper eine optimale Festigkeit und ein optimaler Spannungsverlauf möglich ist. Selbstverständlich sind auch beim Querträger 111 Verstärkungskörper in der Art der Verstärkungskörper 17-19 möglich.

Der Querträger 111 hat einen Grundkörper 116 mit einem mittleren Abschnitt 122, mit einem relativ großen Querschnitt, an den sich seitlich zu den Längsenden 21 im Querschnitt verjüngende Abschnitte 123 sowie schließlich längsaußen Montageabschnitte 124 anschließen, an denen die Seitenträger 112 befestigt sind. Die Grundstruktur des Grundkörpers 116 ähnelt also der Grundstruktur des Querträgers 11. Der mittlere Abschnitt 122 erstreckt sich jedoch über einen längeren Bereich der Querbreite des Fahrzeugs F als der mittlere Abschnitt 22. Die beiden sich verjüngenden Abschnitte 123 sind in Längserstreckungsrichtung 25 kürzer. Der Grundkörper 116 bildet den Querträger 111 als Ganzes.

Der mittlere Abschnitt 122 hat eine als Bodenwand ausgestaltete Tragwand 126, von der sich seitlich weg Seitenschenkel erstrecken, nämlich Tragwände 127. An die Tragwänden 127 schließen sich Flanschschenkel 128 an. Die Querschnittskonturen der Grundkörper 16 und 116 sind also sehr ähnlich, wobei diese Querschnittskonturen nur beispielhaft zu verstehen sind, d.h. dass bei einem Grundkörper jederzeit auch andere Querschnitte, zum Beispiel L-förmige Querschnitte oder dergleichen möglich sind.

Dennoch bildet auch der Querträger 11 einen Querträger quasi konstanter Spannung, was durch das nachfolgend beschriebene Presshärten erzielt wird.

Im Bereich seiner Quermitte 36, die man in Bezug auf die Längserstreckung 25 auch als eine Längsmitte bezeichnen kann, hat der Grundkörper 116 eine Verstärkungsumformung in Gestalt einer Verstärkungsvertiefung oder Verstärkungssicke 137. Die Verstärkungssicke 137 ist im Bereich der Quermitte 36 am breitesten, während sie zu den Längsenden 21 hin, also bezüglich der Längserstreckung 25, schmaler wird. Insgesamt ergibt sich in der Frontalansicht von hinten eine rautenförmige Gestalt, wobei dies nur als eine zweckmäßige Maßnahme zu verstehen ist, d.h. dass jederzeit auch andere Verstärkungsvertiefungen oder Verstärkungsumformungen möglich sind, nämlich tiefere, weniger tiefere, Verstärkungsumformungen, andere Geometrien oder dergleichen. Der Fachmann wird für den jeweiligen Anwendungsfall die beste Geometrie und Gestalt auswählen.

Beispielsweise sind nämlich zwischen den Abschnitten 123 und der Verstärkungssicke 137 noch zwei weitere Verstärkungsumformungen, nämlich Verstärkungssicken 138 vorgesehen. Diese sind im Prinzip als lang gestreckte U-förmige Längsnuten ausgestaltet.

Der Grundkörper 116 bildet ein Tragbauteil 150.

Die Verstärkungssicke 137 hat beispielsweise eine Bodenwand 139 sowie sich zwischen der Bodenwand 139 und der Tragwand 126 des Grundkörpers 116 erstreckende Seitenwände 140. Die Übergangsbereiche zwischen der Tragwand 126 und den Seitenwänden 140 sind vorzugsweise ausgerundet. Die Endbereiche der Verstärkungssicken 137 und 138 sind vorteilhaft auch ausgerundet.

Der Grundkörper 116 ist vorzugsweise einstückig und wird beispielsweise im Rahmen eines Kalt-Umformprozesses vorgeformt, wobei beim dadurch hergestellten Rohling die Verstärkungssicken 137 und 138 nicht oder nicht im dargestellten Umfang vorhanden sind. Prinzipiell wäre es aber möglich, bereits bei der Kaltumformung die Verstärkungssicken 137 und 138 im dargestellten Umfang herzustellen.

Beispielsweise wird die Verstärkungssicke 137 durch ein Warm-Umformwerkzeug 40 hergestellt, das einen Prägestempel 41 und einen Prägestempel 42 umfasst, die an ihrer Frontseite Prägekonturen 43 und 44 aufweisen, um die Verstärkungssicke 137 zu formen. Die Prägekonturen 43 ist beispielsweise als eine Ausnehmung ausgestaltet, während die Prägekontur 44 einen Vorsprung bildet, der in die Verstärkungssicke 137 sozusagen hineinpasst.

Das Umformwerkzeug 40 ist beheizbar, zweckmäßigerweise auch kühlbar. Beispielsweise ist eine Temperiervorrichtung 45 zur Temperierung eines Fluids, z.B. Öl, Wasser oder dergleichen, vorgesehen, das in Leitungen 46 zur Prägekontur 43 vorströmen kann und dort beispielsweise im Bereich der Rundungen zwischen den Tragwänden 126 und 127 eine Aufheizung des Prägestempels 41 bewirkt. Selbstverständlich kann das Fluid auch als ein Kühlmedium dienen.

Weiterhin ist exemplarisch ein Konzept mit einer Widerstandsheizung 47 dargestellt, die eine Heizschlange 48 aufweist.

Beim Prägestempel 42 ist exemplarisch eine Wirbelstromheizung 49 dargestellt, die sich im Bereich der Prägekontur 44 befindet und dort eine lokale Aufheizung bewirkt.

Mithin ist es also möglich, den Grundkörper 116 mit dem Umformwerkzeug 40 lokal so zu erwärmen, beispielsweise auf einen eingangs beschriebenen Wärmebereich, vorzugsweise auch später wieder abzukühlen, dass partielle Zonen mit hoher Festigkeit entstehen, beispielsweise im Quermittenbereich 20. Weil die Wärmebehandlung im Umformwerkzeug 40 stattfindet, ist auch gewährleistet, dass der Grundkörper 116 eine definierte, sehr exakte Geometrie aufweist.

Die Wärmebehandlung findet vorzugsweise auch im Bereich der Verstärkungssicken 138 statt. Dort wird jedoch zweckmäßigerweise eine geringere Festigkeit eingestellt. Es kann sogar vorgesehen sein, dass entlang der Längserstreckung 25 unterschiedlich wärmebehandelte Zonen geschaffen werden, so dass beispielsweise im Quermittenbereich 20 eine hohe Festigkeit erzielt wird, die dann möglichst kontinuierlich in Richtung der Längsenden 21 abnimmt. Dort ist also der Querträger 111 sozusagen eher zäh und nachgiebig, während er im Quermittenbereich 20 eine hohe Festigkeit und somit Belastbarkeit beispielsweise durch die Anhängekupplung 1 und/oder bei einem Heckaufprall oder dergleichen aufweist.

Oben wurde bereits angedeutet, dass auch der Querträger 111 einen Verstärkungskörper aufweisen kann. Beispielsweise könnte man im Quermittenbereich 20 einen modifizierten Verstärkungskörper 117 einbauen, der in Figur 8 dargestellt ist. Der Verstärkungskörper 117 hat beispielsweise zu den Verstärkungssicken 137 und 138 passende Vertiefungen 118 und 119, so dass seine Bodenwand 31 formschlüssig an der Innenseite des Grundkörpers 16 angebracht werden kann, also im wesentlichen flächig an der Tragwand 126 anliegt.

Die Trägeranordnung 210 umfasst einen sozusagen zweiteiligen Querträger 211, der aus Tragbauteilen 250 zusammengesetzt ist. Die Tragbauteile 250 umfassen jeweils einen Seitenträger 212. Die Seitenträger 212 umfassen einen plattenartigen Tragarm 213. Die Tragarme 213 sind beispielsweise mit Längsträgern T des Fahrzeugs F bzw. der Karosserie K verschraubt. Die Tragarme 213 können als Crashbauteile ausgestaltet sein, d.h. sie sind bei einem Heckaufprall auf das Fahrzeug F definiert nachgiebig und wirken stoßabsorbierend.

Die Tragarme 213 stehen seitlich und winkelig von Querträgerarmen 251 ab. Die Querträgerarme 251 bilden jeweils ein Teilsegment des Querträgers 211.

Die Querträgerarme 251 haben jeweils eine näher bei der Heckwand H angeordnete Tragwand 226 sowie eine von der Heckwand H entfernte Tragwand 227.

Während die Tragwand 226 einen im wesentlichen geradlinigen Verlauf hat, in ihrer Kontur also zur Heckkontur der Karosserie K passt, hat die Tragwand 227 einen gekrümmten, bogenförmigen Verlauf.

Der Abstand zwischen der Tragwand 226 und der Tragwand 227 ist im Bereich der Quermitte 36 des Querträgers 211 am größten, während im Bereich der Längsenden 21, im Übergangsbereich zu den Seitenträgern 212, der Abstand zwischen den Tragwänden 226 und 227 am kleinsten ist. Dort gehen die Tragwände 226 und 227 ineinander über, wobei selbstverständlich auch dort noch ein gewisser Abstand möglich wäre.

Zwischen den Tragwänden 226 und 227 erstreckt sich eine Rippenstruktur 230. Die Rippenstruktur 230 umfasst Rippen 234, die Zickzack-förmig zwischen den beiden Tragwänden 226 und 227 verlaufen. Die Rippen 234 sind plattenartig. Die Rippen haben im am Fahrzeug F montierten Zustand der Trägeranordnung 210 eine vertikale Orientierung, d.h. ihre freien Schmalseiten sind oben und unten.

Die Tragwände 226 und 227 und die Rippenstruktur 230 sind Bestandteile eines Grundkörpers 216.

Selbstverständlich wäre es auch denkbar, eine Abdeckung zwischen den Tragwänden 227 und 226 vorzusehen, so dass die Rippen 234 oben und/oder unten abgedeckt sind. Allerdings kann die Trägeranordnung 210 auch durch andere Bauteile abgedeckt sein, so zum Beispiel durch eine Heck-Schürze oder -Blende B des Fahrzeugs F

Die Rippen 234 stoßen mit ihren Schmalseiten jeweils an die Tragwände 226 und 227 an bzw. sind dort mit diesen einstückig verbunden.

Hier greift nämlich das innovative Fertigungsverfahren durch, bei dem nämlich die beiden Tragbauteile 250 jeweils Gussbauteile oder als Strangpressprofile oder Extrusionsbauteile in einem Stück hergestellt sind. Die Tragbauteile 250 werden beispielsweise direkt als Aluminium-Strangpressprofile hergestellt. Es versteht sich, dass die Tragbauteile 250 auch durch einen Umformprozess, beispielsweise Schmieden, herstellbar sind.

Vorteilhaft ist vorgesehen, dass die beiden Tragbauteile 250 symmetrisch sind, so dass sie mit denselben Werkzeugen, insbesondere denselben Formen, herstellbar sind.

An den einander zugewandten Endbereichen 252 haben die Querträgerarme 251 jeweils einen Aufnahmeabschnitt 253 zur Bildung der Halterung 215. Wenn die beiden Querträgerarme 251 mit ihren Endbereichen 252 stirnseitig aneinander stoßen, begrenzen die Aufnahmeabschnitte 253 jeweils eine Hälfte der Halterung 215. Somit kann also integral in den Querträger 211 eine Halterung zur Aufnahme einer Anhängekupplung eingebracht sein oder der Querträger 211 die Halterung für die Anhängekupplung (oder einen Lastenträger) bereitstellen. Es wäre nämlich auch möglich, beispielsweise die Halterungen 15' für das Kupplungsteil M des Lastenträgers L derart in die Tragstruktur des Querträgers 211 integral einzubinden.

Eine weitere Ausführungsform kann vorsehen, dass die Aufnahmeabschnitte 253 beispielsweise als eine Aufnahme für eine separate Halterung der Anhängekupplung, beispielsweise ein Aufnahmerohr, der Anhängekupplung dienen. Beispielsweise ist dieses Aufnahmerohr in der durch die Aufnahmeabschnitte 253 definierte Aufnahme 254 aufgenommen, beispielsweise dort verlötet, durch einen Presssitz gehalten oder dergleichen.

Ein solches Aufnahmerohr oder auch ein sonstiges Montagebauteil einer Anhängekupplung, zum Beispiel ein Gehäuse für eine Lagerung des Kupplungsarmes, könnte auch auf anderem Wege mit den Querträgerarmen 251 verbunden sein, beispielsweise durch eine Schraubverbindung, Schweißen, Kleben oder, was auch vorteilhaft ist, im Rahmen eines Verbundgusses bei der Herstellung der Tragbauteile 250 direkt miterzeugt bzw. geformt werden.

Im Bereich der Endbereiche 252 erstrecken sich zudem Verbindungsstege 255 zwischen den Tragwänden 226 und 227 und/oder den benachbarten Rippen 234. Die Verbindungsstege 255 sind mit einer im Querschnitt halbzylindrischen Ausnehmung versehen, die die Aufnahme 254 jeweils zur Hälfte bereitstellt.

An den Endbereichen 252 steht vorteilhaft jeweils ein Montageflansch 259 vor die seitlichen Tragwände 227 vor. Die Montageflansche 259 dienen beispielsweise zu einer Verbindung der Tragbauteile 250 miteinander.

Selbstverständlich ist es auch möglich, dass die Tragbauteile 250 anderweitig miteinander verbunden werden, zum Beispiel durch an die Seitenwände 226 und/oder 227 angebaute Verbindungsplatten oder dergleichen.

Die Rippenstruktur 230 könnte selbstverständlich auch eine andere Orientierung haben, wenn andere Steifigkeitsanforderungen bestehen. Jedenfalls ist es vorteilhaft, dass der Querträger 211 sozusagen ein Querträger gleicher Spannung ist.

Weitere Verstärkungsmaßnahmen sind ohne weiteres möglich, beispielsweise durch das vorgenannte Presshärten, durch Anbringung von Verstärkungskörpern oder dergleichen. Selbstverständlich ist es möglich, einen als Urform-Teil oder Umform-Teil hergestellten und integral mit einer Rippenstruktur versehenen Querträger auch einstückig über die gesamte Querbreite des Fahrzeugs F herzustellen, was beim nachfolgenden Ausführungsbeispiel deutlich wird:
Der Querträger 311 der Trägeranordnung 310 umfasst integral seitliche Tragarme 313, mithin also Seitenträger 312. Der Querträger 311 ist also quasi in einem einzigen Stück hergestellt und bildet ein einziges Tragbauteil 350. Zwischen seitlichen Tragwänden 326 des Tragbauteils 350 erstreckt sich eine Tragwand 327. Die Tragwände 326 und 327 definieren einen U-förmigen Querschnitt.

Im Bereich der Seitenträger 312 sind zwischen den seitlichen Tragwänden 326 nur Verbindungsstege 355 vorgesehen, die mit Durchtrittsöffnungen 356 versehen sind, durch die Schrauben oder sonstige Befestigungsbolzen hindurch gesteckt werden können. Die Verbindungsstege 355 sind z.B. zylindrisch. Für die Seitenträger 312 reicht diese Tragstruktur aus, da dort die Anbindung an die Karosserie K gegeben ist, also keine besonders hohe Belastung des Tragbauteils 350 stattfindet.

In demjenigen Bereich des Tragbauteils 350, das den Querträger 311 bereitstellt und definiert, ist jedoch zwischen den Tragwänden 326 eine Rippenstruktur 330 angeordnet. Die Rippenstruktur 330 umfasst beispielsweise wabenförmig angeordnete Rippen 334.

Die Tragwände 326 und 327 und die Rippenstruktur 330 sind Bestandteile eines Grundkörpers 316.

Eine Steifigkeitsstruktur des Tragbauteils 350 ist beispielsweise durch die Geometrie der Rippenstruktur 330 definiert. Beispielsweise sind an Krümmungsabschnitten 357, mit denen der Querträger 311 in die Seitenträger 312 übergeht, verhältnismäßig viele Rippen 334 bzw. eine dichte Rippenstruktur 330 vorgesehen. Selbstverständlich wäre es auch vorteilhaft, im Bereich der Quermitte 36 des Querträgers 311 eine dichte, hoch belastbare Rippenstruktur vorzusehen, z.B. auch um das dort angeordnete Aufnahmerohr 358 für die Anhängekupplung 1 fest in das Tragbauteil 350 einzubetten und eine tragfähige, insbesondere auch bei einem Heckaufprall auf das Fahrzeug F feste und belastbare Struktur bereitzustellen.

Das Aufnahmerohr 358, mithin also die Halterung 315 der Trägeranordnung 310, ist integral bei der Herstellung des Tragbauteils 350 angeformt. Beispielsweise umfasst eine Gussform zur Herstellung des Tragbauteils 350 entsprechende Konturen zur Bildung des Aufnahmerohrs 358. Das Aufnahmerohr 358 kann aber selbstverständlich auch als ein separates Bauteil hergestellt sein, das nachträglich beispielsweise in eine z.B. entsprechend zylindrische Aufnahme des Tragbauteils 350 eingesetzt, insbesondere eingepresst wird.

Das Tragbauteil 350 kann zur Herstellung unterschiedlicher Festigkeitsbereiche nachbehandelt sein, beispielsweise durch ein Presshärten. So ist es beispielsweise vorteilhaft, im Bereich der Halterung 315, also der Quermitte 36, einen festeren Bereich herzustellen, während im Bereich der Längsenden 21 eine geringere Festigkeit ausreicht, d.h. dass das Tragbauteil 350 beispielsweise mit einer geringeren Temperatur wärmebehandelt wird oder auch gar nicht.

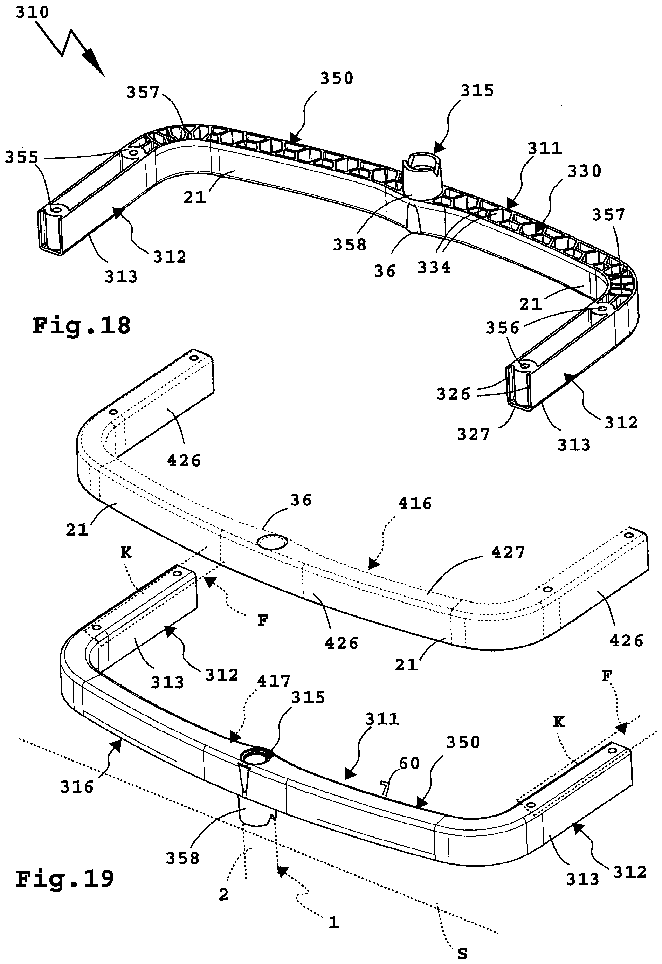

Schematisch ist in Figur 19 noch ein alternatives Konzept angedeutet, das auch möglich ist: beispielsweise könnte das Tragbauteil 350 als ein Verstärkungskörper 417 ausgebildet sein, der in einen Grundkörper 416 eingesteckt wird oder an den Grundkörper 416 angespritzt wird.

Der Grundkörper 416, der nur in gestrichelten Linien dargestellt ist, ist beispielsweise schalenförmig und weist Tragwände 426 auf, die Seitenschenkel einer Bodenwand 427 bilden.

Der Verstärkungskörper 417 gleicht ansonsten dem Tragbauteil 350, besteht jedoch beispielsweise aus einem Kunststoffmaterial, insbesondere einem faserverstärkten Kunststoffmaterial. Der Grundkörper 416 kann beispielsweise wärmebehandelt sein, wie dies im Zusammenhang mit den Grundkörpern 116 und 16 bereits erläutert worden ist. Beispielsweise besteht der Grundkörper 416 aus einem Stahlblech, das einer Presshärtung unterzogen wird. Selbstverständlich ist es auch hier möglich, einen optimalen Festigkeits- und Steifigkeitsverlauf einzustellen, so dass beispielsweise im Bereich der Quermitte 36 eine höhere Festigkeit vorgesehen ist als im Bereich der Längsenden bzw. im Übergangsbereich zu den Seitenträgern.

An die Tragbauteile 50-350 kann integral mindestens ein Befestigungselement 60 angeformt sein, z.B. ein Haken oder dergleichen, um z.B. ein Kabel oder dergleichen zu halten. Das Befestigungselement 60 ist z.B. am Verstärkungskörper 17 oder am Tragbauteil 250 oder 350 vorgesehen.

## Patentansprüche

1. Trägeranordnung für eine Anhängekupplung (1) oder einen Lastenträger (L), umfassend einen Querträger (11; 111; 211; 311) und mit dem Querträger (11; 111; 211; 311) verbundene Seitenträger (12, 112; 212; 312) zur Montage an einem Heck einer Karosserie eines Fahrzeugs (F), sowie mindestens eine an dem Querträger (11; 111; 211; 311) angeordnete Halterung (15; 215; 315) für eine Anhängekupplung (1) oder für ein Kupplungsteil (M) eines Lastenträgers (L), wobei die Trägeranordnung (10; 110; 210; 310) mindestens ein Tragbauteil (50-350) aufweist, das einen insgesamt oder zumindest abschnittsweise durch Presshärten hergestellten Grundkörper (16; 116; 216, 316) aufweist, **dadurch gekennzeichnet, dass** dem Grundkörper (16; 116; 216, 316) des Tragbauteils (50-350) ein zweiter, insbesondere durch Presshärtung hergestellter, Tragkörper gegenüberliegt.

2. Trägeranordnung nach Anspruch 1, **dadurch gekennzeichnet, dass** der Grundkörper (16; 116; 216, 316) durch direktes Presshärten und/oder indirektes Presshärten und/oder partielles Presshärten hergestellt ist.

3. Trägeranordnung nach Anspruch 1 oder 2, **dadurch gekennzeichnet, dass** der Grundkörper (16; 116; 216, 316) zunächst kalt umgeformt und anschließend durch Presshärten nachbearbeitet ist.

4. Trägeranordnung nach einem der vorhergehenden Ansprüche, **dadurch gekennzeichnet, dass** der Grundkörper (16; 116; 216, 316) einen Mangan-Stahl und/oder einen Mangan-Bor-Stahl, insbesondere 22MnB5, umfasst.

5. Trägeranordnung nach einem der vorhergehenden Ansprüche, **dadurch gekennzeichnet, dass** eine Aufheizzeit zu einem Austenitisieren des Grundkörpers (16; 116; 216, 316) 5 - 10 min beträgt und/oder eine Austenitisierungstemperatur 880 - 950 °C beträgt und/oder eine Abkühlzeit in einem steifen Bereich des Grundkörpers (16; 116; 216, 316) zwischen 1 und 10 Sekunden beträgt und in einem weicheren Bereich des Grundkörpers (16; 116; 216, 316) mehrere Minuten beträgt.

6. Trägeranordnung nach einem der vorhergehenden Ansprüche, **dadurch gekennzeichnet, dass** der Grundkörper (16; 116; 216, 316) mindestens eine, insbesondere 1,5 - 3 mm, dicke Blechwand aufweist.

7. Trägeranordnung nach einem der vorhergehenden Ansprüche, **dadurch gekennzeichnet, dass** der Grundkörper (16; 116; 216, 316), insbesondere der Querträger (11; 111; 211; 311), an seinen Längsendbereichen (21) über seinen Querschnitt eine Zugfestigkeit von etwa 400 bis 800 N/mm² aufweist und/oder im Bereich der mindestens einen Halterung (15; 215; 315) und/oder quermittig oder in einem Quermittenbereich (20) eine Zugfestigkeit aufweist, die größer als 1200 N/mm², insbesondere größer als 1500 N/mm² ist.

8. Trägeranordnung nach einem der vorhergehenden Ansprüche, **dadurch gekennzeichnet, dass** der Grundkörper (16; 116; 216, 316) mit einer zunderhemmenden Beschichtung versehen ist und/oder eine Beschichtung auf AlSi-Basis und/oder eine Verzinkung aufweist.

9. Trägeranordnung nach einem der vorhergehenden Ansprüche, **dadurch gekennzeichnet, dass** der Grundkörper (16; 116; 216, 316) mindestens eine Verstärkungsumformung, insbesondere eine Verstärkungssicke, aufweist.

10. Trägeranordnung nach einem der vorhergehenden Ansprüche, **dadurch gekennzeichnet, dass** das mindestens eine Tragbauteil (50-350) einen Bestandteil des Querträgers (11; 111; 211; 311) und/oder mindestens eines Seitenträgers (12, 112; 212; 312) und/oder der Halterung (15; 215; 315) bildet.

11. Trägeranordnung nach einem der vorhergehenden Ansprüche, **dadurch gekennzeichnet, dass** der Querträger (11; 111; 211; 311) im Bereich der mindestens einen Halterung (15; 215; 315) und/oder quermittig oder in einem Quermittenbereich (20) eine höhere Steifigkeit und/oder einen größeren Querschnitt und/oder ein höheres Widerstandsmoment aufweist als an seinen Längsenden (21) und/oder dass der Querträger (11; 111; 211; 311) entlang seiner Längserstreckungsachse zwischen seinen Längsenden (21) bei einer auf ihn wirkenden Kraft eine etwa konstante Spannung aufweist.

12. Trägeranordnung nach einem der vorhergehenden Ansprüche, **dadurch gekennzeichnet, dass** der Querträger (11; 111; 211; 311) eine Tragwand (26-426) und eine der Tragwand (26-426) gegenüberliegende Wand aufweist, und dass ein Abstand zwischen der Tragwand (26-426) und der gegenüberliegenden Wand im Bereich einer Quermitte (36) des Querträgers (11; 111; 211; 311) größer ist als im Bereich der Längsenden (21) des Querträgers (11; 111; 211; 311).

13. Trägeranordnung nach einem der vorhergehenden Ansprüche, **dadurch gekennzeichnet, dass** eine Rippenstruktur (30; 230; 330) des Querträgers (11; 111; 211; 311) im Bereich der Quermitte (36) eine höhere Steifigkeit aufweist als im Bereich der Längsenden (21) des Querträgers (11; 111; 211; 311).

14. Trägeranordnung nach einem der vorhergehenden Ansprüche, **dadurch gekennzeichnet, dass** ein erstes und ein zweites Teil des Tragbauteils (50-350), insbesondere zwei Teile des Grundkörpers (16; 116; 216, 316) und/oder der Grundkörper (16; 116; 216, 316) und der Verstärkungskörper (17-19), oder zwei Tragbauteile (50-350) durch eine Schweißverbindung und/oder eine Schraubverbindung und/oder eine Niet-Verbindung und/oder durch Clinchen und/oder durch mechanisches Fügen und/oder thermisches Fügen und/oder durch Hybridfügen mittels eines Klebstoffes miteinander verbunden sind.

## Claims

1. Support assembly for a trailer coupling (1) or a load carrier (L), including a cross-member (11; 111; 211; 311) and with side members (12, 112; 212; 312) connected to the cross-member (11; 111; 211; 311) for fitting to a rear of a body of a vehicle (F), together with at least one holder (15; 215; 315) fitted to the cross-member (11; 111; 211; 311) for a trailer coupling (1) or for a coupling part (M) of a load carrier (L), wherein the support assembly (10; 110; 210; 310) has at least one carrier part (50-350), with a base body (16; 116; 216, 316) produced altogether or at least in parts by press hardening, **characterised in that** a second supporting body, made in particular by press hardening, lies opposite the base body (16; 116; 216, 316) of the carrier part (50-350).

2. Support assembly according to claim 1, **characterised in that** the base body (16; 116; 216, 316) is made by direct press hardening and/or indirect press hardening and/or partial press hardening.

3. Support assembly according to claim 1 or 2, **characterised in that** the base body (16; 116; 216, 316) is firstly cold formed and then reworked by press hardening.

4. Support assembly according to any of the preceding claims, **characterised in that** the base body (16; 116; 216, 316) is of manganese steel and/or manganese boron steel, in particular 22MnB5.

5. Support assembly according to any of the preceding claims, **characterised in that** heating time to austenitization of the base body (16; 116; 216, 316) amounts to 10 min and/or an austenitization temperature is 880 - 950°C and/or a cooling time in a rigid range of the base body (16; 116; 216, 316) lies between 1 and 10 seconds and in a further range of the base body (16; 116; 216, 316) amounts to several minutes.

6. Support assembly according to any of the preceding claims, **characterised in that** the base body (16; 116; 216, 316) has at least one sheet metal wall, in particular 1.5 - 3 mm thick.

7. Support assembly according to any of the preceding claims, **characterised in that** the base body (16; 116; 216, 316), in particular the cross-member (11; 111; 211; 311), has at its longitudinal end sections (21) a tensile strength over its cross-section of around 400 to 800 N/mm², and/or in the area of the holder or holders (15; 215; 315) and/or transversely central or in a transverse central zone (20) has a tensile strength which is greater than 1200 N/mm², in particular greater than 1500 N/mm².

8. Support assembly according to any of the preceding claims, **characterised in that** the base body (16; 116; 216, 316) is provided with a fire-retardant coating and/or a coating based on AlSi and/or is galvanised.

9. Support assembly according to any of the preceding claims, **characterised in that** the base body (16; 116; 216, 316) has at least one reinforcing conversion, in particular a reinforcing beading.

10. Support assembly according to any of the preceding claims, **characterised in that** the carrier part or parts (50-350) forms or form an integral part of the cross-member (11; 111; 211; 311) and/or at least one side member (12, 112, 212; 312) and/or the holder (15; 215; 315).

11. Support assembly according to any of the preceding claims, **characterised in that** the cross-member (11; 111; 211; 311) has in the area of the holder or holders (15; 215; 315), and/or transversely central in a transverse central zone (20) a greater rigidity and/or a greater cross-section and/or a higher moment of resistance than at its longitudinal ends (21), and/or that the cross-member (11; 111; 211; 311) has, under a force acting upon it, a roughly constant tension along an axis of longitudinal extent between its longitudinal ends (21).

12. Support assembly according to any of the preceding claims, **characterised in that** the cross-member (11; 111; 211; 311) has a bearing wall (26-426) and a wall lying opposite the bearing wall (26-426), and a distance between the bearing wall (26-426) and the opposite wall is greater in the area of a transverse centre (36) of the cross-member (11; 111; 211; 311) than in the area of the longitudinal ends (21) of the cross-member (11; 111; 211; 311).

13. Support assembly according to any of the preceding claims, **characterised in that** a rib structure (30; 230; 330) of the cross-member (11; 111; 211; 311) has greater rigidity in the area of the transverse centre (36) than in the area of the longitudinal ends (21) of the cross-member (11; 111; 211; 311).

14. Support assembly according to any of the preceding claims, **characterised in that** a first and a second part of the carrier part (50-350), in particular two parts of the base body (16; 116; 216, 316) and/or the base body (16; 116; 216, 316) and the reinforcing body (17-19), or two carrier parts (50-350), are joined to one another by means of a welded joint and/or a screw connection and/or a rivet connection and/or by clinches and/or by mechanical joining and/or by thermal joining and/or by hybrid joining by means of an adhesive.

## Revendications

1. Ensemble de support pour un attelage de remorque (1) ou un support de charges (L), comprenant un support transversal (11 ; 111 ; 211 ; 311) et des supports latéraux (12, 112 ; 212 ; 312) reliés au support transversal (11 ; 111 ; 211 ; 311) destinés au montage au niveau d'un hayon d'une carrosserie d'un véhicule (F), ainsi qu'au moins une fixation (15 ; 215 ; 315) disposée au niveau du support transversal (11 ; 111 ; 211 ; 311) pour un attelage de remorque (1) ou pour une partie d'attelage (M) d'un support de charges (L), dans lequel l'ensemble de support (10 ; 110 ; 210 ; 310) présente au moins un composant porteur (50 - 350), qui présente un corps de base (16 ; 116 ; 216, 316) fabriqué en totalité ou au moins par endroits par trempe à la presse, **caractérisé en ce qu'**un deuxième corps de support, en particulier fabriqué par trempe à la presse, fait face au corps de base (16 ; 116 ; 216, 316) du composant porteur (50 - 350).

2. Ensemble de support selon la revendication 1, **caractérisé en ce que** le corps de base (16 ; 116 ; 216, 316) est fabriqué par trempe à la presse directe et/ou trempe à la presse indirecte et/ou trempe à la presse partielle.

3. Ensemble de support selon la revendication 1 ou 2, **caractérisé en ce que** le corps de base (16 ; 116 ; 216, 316) est façonné dans un premier temps à froid et par la suite est usiné ultérieurement par une trempe à la presse.

4. Ensemble de support selon l'une quelconque des revendications précédentes, **caractérisé en ce que** le corps de base (16; 116; 216, 316) comprend un acier de manganèse et/ou un acier de manganèse-bore, en particulier du 22MnB5.

5. Ensemble de support selon l'une quelconque des revendications précédentes, **caractérisé en ce qu'**un temps de chauffage aux fins d'une austénitisation du corps de base (16 ; 116 ; 216, 316) est de 5 - 10 min et/ou une température d'austénitisation est de 880 - 950 °C et/ou un temps de refroidissement dans une zone rigide du corps de base (16 ; 116 ; 216, 316) est compris entre 1 et 10 secondes et est de plusieurs minutes dans une zone plus souple du corps de base (16 ; 116 ; 216, 316).

6. Ensemble de support selon l'une quelconque des revendications précédentes, **caractérisé en ce que** le corps de base (16; 116; 216, 316) présente au moins une paroi en tôle épaisse en particulier de 1,5 - 3 mm.

7. Ensemble de support selon l'une quelconque des revendications précédentes, **caractérisé en ce que** le corps de base (16 ; 116 ; 216, 316), en particulier le support transversal (11 ; 111 ; 211 ; 311) présente au niveau de ses zones d'extrémité longitudinale (21) sur sa section transversale une résistance à la traction allant d'environ 400 à 800 N/mm² et/ou présente dans la zone de l'au moins une fixation (15 ; 215 ; 315) et/ou au centre de manière transversale ou dans une zone de milieu transversal (20) une résistance à la traction qui est supérieure à 1200 N/mm², en particulier supérieure à 1500 N/mm².

8. Ensemble de support selon l'une quelconque des revendications précédentes, **caractérisé en ce que** le corps de base (16 ; 116 ; 216, 316) est pourvu d'un revêtement empêchant la formation de calamine et/ou présente un revêtement à base de AlSi et/ou un zingage.

9. Ensemble de support selon l'une quelconque des revendications précédentes, **caractérisé en ce que** le corps de base (16; 116; 216, 316) présente au moins un façonnage de renforcement, en particulier une moulure de renforcement.

10. Ensemble de support selon l'une quelconque des revendications précédentes, **caractérisé en ce que** l'au moins un composant porteur (50 - 350) forme un élément constitutif du support transversal (11 ; 111 ; 211 ; 311) et/ou d'au moins un support latéral (12, 112 ; 212 ; 312) et/ou de la fixation (15 ; 215 ; 315).

11. Ensemble de support selon l'une quelconque des revendications précédentes, **caractérisé en ce que** le support transversal (11 ; 111 ; 211 ; 311) présente dans la zone de l'au moins une fixation (15 ; 215 ; 315) et/ou au centre de manière transversale ou dans une zone de milieu transversal (20), une rigidité plus élevée et/ou une section transversale plus grande et/ou un couple de résistance plus élevé qu'au niveau de ses extrémités longitudinales (21), et/ou que le support transversal (11 ; 111 ; 211 ; 311) présente le long de son axe d'extension longitudinal, entre ses extrémités longitudinales (21), en présence d'une force qui agit sur lui, une tension à peu près constante.

12. Ensemble de support selon l'une quelconque des revendications précédentes, **caractérisé en ce que** le support transversal (11 ; 111 ; 211 ; 311) présente une paroi porteuse (26 - 426) et une paroi faisant face à la paroi porteuse (26 - 426), et qu'une distance entre la paroi porteuse (26 - 426) et la paroi faisant face est plus grande dans la zone d'un milieu transversal (36) du support transversal (11 ; 111 ; 211 ; 311) que dans la zone des extrémités longitudinales (21) du support transversal (11 ; 111 ; 211 ; 311).

13. Ensemble de support selon l'une quelconque des revendications précédentes, **caractérisé en ce qu'**une structure nervurée (30 ; 230 ; 330) du support transversal (11 ; 111 ; 211 ; 311) présente dans la zone du milieu transversal (36) une rigidité plus élevée que dans la zone des extrémités longitudinales (21) du support transversal (11 ; 111 ; 211 ; 311).

14. Ensemble de support selon l'une quelconque des revendications précédentes, **caractérisé en ce qu'**une première et une deuxième partie du composant porteur (50 - 350), en particulier deux parties du corps de base (16 ; 116 ; 216, 316) et/ou le corps de base (16; 116 ; 216, 316) et le corps de renforcement (17 - 19), ou deux composants porteurs (50 - 350) sont reliés entre eux par une liaison par soudure et/ou une liaison par vissage et/ou une liaison par rivetage et/ou une liaison par clinchage et/ou par un assemblage mécanique et/ou un assemblage thermique et/ou par un assemblage hybride au moyen d'une colle.
